# FASCICULE DE BREVET EUROPEEN

(11) **EP 2 879 305 B1**
(45) Date de publication et mention de la délivrance du brevet: **02.11.2016**
(21) Numéro de dépôt: 14194784.6
(22) Date de dépôt: 25.11.2014
(51) Int. Cl.: H04B 7/185

(54) **Gestion des ressources dans un système de communication par satellite par la surveillance de la puissance isotrope rayonnée équivalente émise par un terminal.**
Verwaltung der Betriebsmittel in einer Anordnung für Satellliten Kommunikation durch Überwachung der effektiven isotrop abgestrahlten Leistung ausgesendet von einem Endgerät.
Resource management in a satellite communication system by monitoring the effective isotropic radiated power emitted by a terminal.

(30) Priorité: 29.11.2013 FR 1302784
(43) Date de publication de la demande: 03.06.2015
(73) Titulaire: Thales, 92400 Courbevoie (FR)
(72) Inventeur: Touret, Marc, 92622 Gennevilliers Cedex (FR); Prillard, Bertrand, 92622 Gennevilliers Cedex (FR); Guillerme, Yves, 92622 Gennevilliers Cedex (FR); Privat, Eric, 92622 Gennevilliers Cedex (FR)
(74) Mandataire: Hammes, Pierre

(56) Documents cités:
- EP-A2- 2 273 693
- US-A1- 2003 008 615
- US-A1- 2012 188 880
- US-A1- 2012 191 824

## Description

La présente invention concerne le domaine des systèmes de communication par satellite et porte plus précisément sur un procédé de gestion des ressources de communications allouées par un équipement de contrôle central aux divers terminaux de communication au sein d'un système global de communication par satellite. Le terme ressources de communications désigne ici notamment la bande passante et la puissance émise, la présente invention visant plus précisément l'optimisation de la puissance.

En particulier, l'invention concerne la gestion des ressources de communication par le biais de la surveillance de la puissance isotrope rayonnée équivalente émise par un terminal du système de communication par satellite.

Dans le domaine des communications par satellites, les normes techniques internationales, telles les normes définies par l'Union Internationale des Télécommunications, définissent des préconisations dans différents sous-domaines tels que la gestion efficace du spectre ou la propagation des ondes électromagnétiques.

En particulier, ces normes préconisent de respecter certaines contraintes quant à la densité de puissance isotrope rayonnée équivalente des stations de communications terrestres émettant au sein d'un réseau de communications par satellite. Ces contraintes sont définies par un seuil de puissance maximale à respecter par les stations terrestres émettrices pour limiter les interférences générées sur les satellites adjacents au satellite visé par la station.

La puissance isotrope rayonnée équivalente d'une station terrestre peut être calculée à partir du bilan de liaison. Autrement dit, il est possible de calculer la puissance minimale à laquelle une station doit émettre pour respecter un débit utile de transmission donné et un rapport signal à bruit cible. Ce calcul prend en compte les paramètres de la forme d'onde du signal émis, les caractéristiques des stations du réseau ainsi que celles du satellite. Ce calcul peut être réalisé par un équipement de contrôle des ressources pour contrôler, via une boucle d'asservissement, la puissance d'émission d'un signal par une station terrestre.

Si la puissance calculée est supérieure à la limite recommandée, le contrôle des ressources opère une baisse du débit demandé à la station pour que sa puissance diminue.

Pour effectuer un calcul précis de la puissance isotrope rayonnée équivalente, il est nécessaire de modéliser précisément les différentes incertitudes de la chaine de transmission ce qui nécessite un travail important de calibration des équipements. De plus, dans le cas de stations terrestres mobiles, notamment les stations aéroportées, les fortes variations de température augmentent les incertitudes sur les différents gains de la chaine de transmission. Ces incertitudes ont pour conséquence une limitation du débit maximum alloué à une station du fait de l'imprécision des calculs de bilan de liaison. Autrement dit, la consigne de puissance calculée présentant un écart par rapport à la puissance réellement émise, les ressources ne peuvent être allouées de façon optimale pour approcher au mieux les limites de puissance maximales autorisées.

Autrement dit, lorsque plusieurs stations terrestres partagent dynamiquement les mêmes ressources de communication par satellite, l'équipement de contrôle des ressources partage la bande de fréquence entre ces stations mais aussi la puissance d'émission. Le partage de puissance est d'autant plus optimal que la puissance isotrope rayonnée équivalente émise est précise par rapport à la consigne de puissance donnée par l'équipement de contrôle des ressources. Dans le cas contraire, les ressources du système ne sont pas utilisées au maximum de leurs capacités.

La présente invention vise donc à pallier au problème d"incertitude de calcul de la puissance isotrope rayonnée équivalente qui rend non optimale l'allocation des ressources de communication aux différents utilisateurs d'un système de communication par satellite.

Les solutions permettant un calcul précis de la puissance isotrope rayonnée équivalente sont le plus souvent basées sur une calibration en fréquence et température précise des équipements de la chaine de transmission d'une station terrestre émettrice. Cette solution est contraignante car elle dépend des composants utilisés qui peuvent être renouvelés rendant la calibration obsolète.

On connait par ailleurs la solution décrite dans le document US2012/188880.

La présente invention permet de répondre au problème précité et de résoudre les limitations des solutions connues par une estimation précise et continue de l'écart entre la consigne de puissance calculée par l'équipement de contrôle des ressources et la puissance isotrope rayonnée équivalente effectivement émise par une station terrestre.

L'invention a ainsi pour objet un dispositif de communication par satellite comprenant une antenne pour communiquer avec un satellite, ledit dispositif comportant
- un module de mesure configuré pour effectuer une pluralité de mesures de la puissance isotrope rayonnée équivalente de l'antenne,
- un module de réception adapté pour recevoir, périodiquement, une consigne de puissance isotrope rayonnée équivalente à appliquer au signal émis par ladite antenne, ladite consigne étant calculée par un équipement de contrôle pour respecter un bilan de liaison cible sur la liaison satellite entre ledit dispositif de communication et un autre dispositif du même réseau,
- un module de calcul configuré pour
   ∘calculer une moyenne, sur un premier intervalle temporel, de ladite pluralité de mesures de la puissance,
   ∘calculer une moyenne, sur un second intervalle temporel sensiblement identique audit premier intervalle temporel, desdites consignes de puissance reçues,
   ∘calculer l'écart entre la moyenne des consignes de puissance et la moyenne des mesures de puissance,
- un module de transmission adapté pour transmettre ledit écart vers ledit équipement de contrôle, via ledit satellite.

Le dispositif selon l'invention comprend, selon un aspect particulier de l'invention, un amplificateur haute puissance dans lequel ledit module de mesure est implémenté, la puissance étant mesurée en sortie dudit amplificateur haute puissance et étant corrigée du gain de l'antenne.

Le dispositif selon l'invention comprend, selon un aspect particulier de l'invention, une chaine RF connectée en entrée à la sortie de l'amplificateur haute puissance et en sortie à l'antenne, la puissance mesurée en sortie dudit amplificateur haute puissance étant en outre corrigée du gain de la chaine RF.

Selon un autre aspect particulier du dispositif selon l'invention, la puissance mesurée en sortie de l'amplificateur haute puissance est une puissance crête et cette puissance est corrigée du facteur crête de la modulation du signal émis.

Selon un autre aspect particulier du dispositif selon l'invention, la puissance mesurée est corrigée d'un biais de mesure dépendant de la différence de puissance entre une porteuse modulée et une porteuse non modulée.

Selon un autre aspect particulier du dispositif selon l'invention, lesdites moyennes sont des moyennes glissantes sur un horizon temporel choisi.

L'invention a également pour objet un système de communication par satellite comprenant au moins un dispositif de communication par satellite selon l'invention et un équipement de contrôle des ressources allouées au sein dudit système, ledit équipement de contrôle comprenant :
- Un module de calcul adapté pour calculer une consigne de puissance isotrope rayonnée équivalente en fonction d'un bilan de liaison cible à atteindre sur la liaison satellite entre un premier dispositif de communication et un second dispositif de communication,
- Un module de transmission de cette consigne de puissance audit premier dispositif,
- Un module de réception d'un écart entre ladite consigne de puissance et la puissance isotrope rayonnée équivalente émise par ledit premier dispositif, ledit écart étant transmis par ledit premier dispositif,
- Un module de gestion de ressources configuré pour allouer plus ou moins de ressources de communication audit premier dispositif ou à d'autres dispositifs du système en fonction dudit écart.

Selon un aspect particulier du système selon l'invention, ledit module de gestion de ressources est configuré pour mettre à jour la puissance isotrope rayonnée équivalente maximum admissible en lui ajoutant ledit écart de puissances reçu.

Selon un aspect particulier du système selon l'invention, ledit module de gestion de ressources est configuré pour prendre les décisions d'allocations de ressources suivantes :
- Si la consigne de puissance transmise audit premier dispositif est strictement inférieure à la puissance isotrope rayonnée équivalente maximum admissible, allouer les ressources disponibles audit premier dispositif ou à d'autres dispositifs du système,
- Si la consigne de puissance transmise audit premier dispositif est strictement supérieure à la puissance isotrope rayonnée équivalente maximum admissible, diminuer les ressources allouées audit premier dispositif.

Selon un aspect particulier du système selon l'invention, ledit équipement de contrôle comporte une boucle d'asservissement de la puissance dudit premier dispositif configurée pour ajuster la consigne de puissance transmise audit premier dispositif en fonction des ressources allouées audit premier dispositif et d'une cible de rapport signal à bruit mesurée sur la liaison entre ledit premier dispositif et ledit second dispositif.

Selon un aspect particulier du système selon l'invention, les ressources de communications allouées sont des ressources en débit ou en efficacité spectrale.

L'invention a également pour objet un procédé de contrôle des ressources allouées au sein d'un système de communication par satellite comprenant au moins un dispositif de communication par satellite et un équipement de contrôle des ressources au sein dudit système, ledit procédé comprenant les étapes suivantes :
- Calculer périodiquement une consigne de puissance isotrope rayonnée équivalente en fonction d'un bilan de liaison cible à atteindre sur la liaison satellite entre un premier dispositif de communication et un second dispositif de communication,
- Effectuer une pluralité de mesures de la puissance isotrope rayonnée équivalente de l'antenne dudit premier dispositif,
- Calculer une moyenne, sur un premier intervalle temporel, de ladite pluralité de mesures de puissance,
- Calculer une moyenne, sur un second intervalle temporel sensiblement identique audit premier intervalle temporel, desdites consignes de puissance,
- Calculer l'écart entre la moyenne des consignes de puissance et la moyenne des mesures de puissance,
- Allouer plus ou moins de ressources de communication audit premier dispositif ou à d'autres dispositifs du système en fonction dudit écart.

Le procédé selon l'invention peut comprendre également une étape de mise à jour de la puissance isotrope rayonnée équivalente maximum admissible en lui ajoutant ledit écart de puissances.

Le procédé selon l'invention peut comprendre également l'étape de décisions d'allocations de ressources suivante :
- Si la consigne de puissance transmise audit premier dispositif est strictement inférieure à la puissance isotrope rayonnée équivalente maximum admissible, allouer les ressources disponibles audit premier dispositif ou à d'autres dispositifs du système,
- Si la consigne de puissance transmise audit premier dispositif est strictement supérieure à la puissance isotrope rayonnée équivalente maximum admissible, diminuer les ressources allouées audit premier dispositif.

D'autres caractéristiques et avantages de la présente invention apparaîtront mieux à la lecture de la description qui suit en relation aux dessins annexés qui représentent :
- La figure 1, un schéma d'un système de communications par satellite selon l'art antérieur,
- La figure 2, un schéma d'un système de communications par satellite selon l'invention,
- La figure 3, un organigramme détaillant les étapes de mise en oeuvre du procédé, selon l'invention, de gestion de ressources allouées au sein d'un système de communications par satellite.

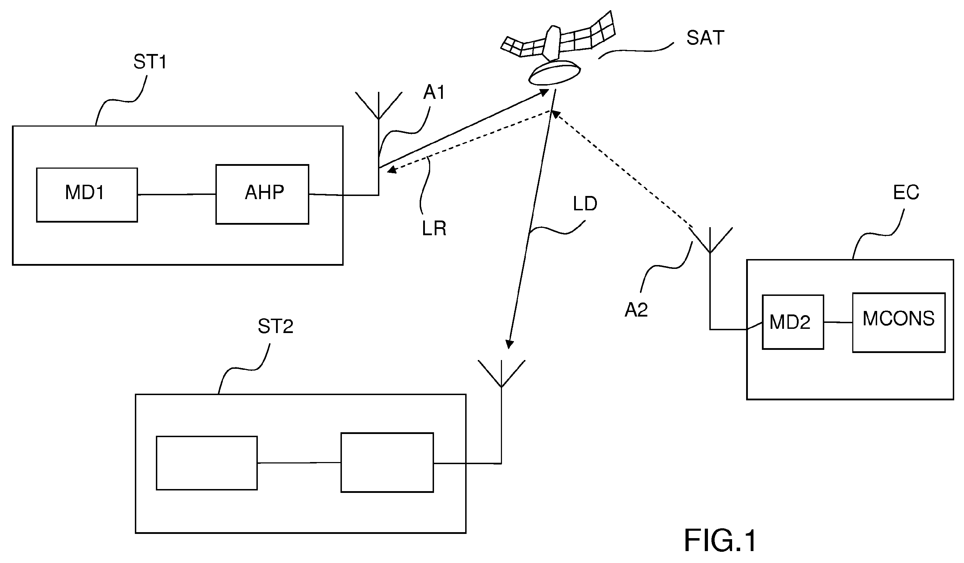

La figure 1 illustre, sur un schéma, un système de communications par satellite SAT comprenant au moins une station terrestre ST1, qui peut être embarquée dans un véhicule en particulier un aéronef, et un équipement de contrôle EC central chargé de gérer les ressources de communication globales du système pour l'ensemble des stations cherchant à communiquer via le satellite SAT. A titre illustratif sont représentées sur la figure 1 deux stations terrestres ST1,ST2 étant entendu que dans un cas d'application réel, le système de communication par satellite peut être composé d'un grand nombre de stations.

En particulier, l'équipement de contrôle EC est chargé de contrôler la puissance du signal émis par les stations ST1,ST2 du réseau de sorte à respecter les limites de puissance isotrope rayonnée équivalente prescrites afin de ne pas créer d'interférences pour les satellites voisins SAT mais également de sorte à gérer de façon optimale les ressources allouées aux différentes stations du réseau pour communiquer.

A cet effet, l'équipement de contrôle EC comporte un module de calcul d'une consigne de puissance émise pour chaque station ST1,ST2. La consigne de puissance est calculée à partir du bilan de liaison souhaité sur le lien de communication LD entre la station ST1 et une autre station ST2 du réseau. Le bilan de liaison dépend notamment du débit souhaité pour la liaison LD et du rapport signal à bruit cible. La consigne de puissance est ensuite transmise à la station ST1 via une voie de retour LR dédiée entre l'équipement de contrôle EC et la station ST1. A cet effet, l'équipement de contrôle EC et la station terrestre ST comportent des moyens MD1,MD2 d'émission/réception du signal transmis sur la liaison satellite.

Pour garantir un rapport signal à bruit cible, l'équipement de contrôle EC peut mettre en place une boucle d'asservissement de la puissance de la station terrestre en mesurant le rapport signal à bruit sur la liaison directe LD et en incrémentant ou décrémentant la consigne de puissance périodiquement afin de converger vers un état stable. Pour cela, la consigne de puissance est mise à jour régulièrement, par exemple au rythme d'une trame de la forme d'onde du signal émis, et retransmise périodiquement à la station terrestre ST1.

La station terrestre ST1 comporte au moins des moyens MD1 d'émission et de réception d'un signal selon une forme d'onde satellite, encore appelés modem, un amplificateur haute puissance AHP et une antenne satellite A1. La station ST1 peut comporter d'autres équipements nécessaires à la mise en oeuvre d'une communication par satellite, ces équipements supplémentaires n'étant pas représentés sur la figure 1.

Sur réception de la consigne de puissance, la station ST1 ajuste la puissance de sortie du modem MD1 égale à la puissance d'entrée de l'amplificateur haute puissance AHP. La puissance d'entrée de l'amplificateur est déterminée en prenant en compte le gain de l'amplificateur AHP, le gain de l'antenne et éventuellement le gain d'autres éléments situés entre l'amplificateur et l'antenne telle qu'une chaine RF. Comme discuté en préambule, ces calculs entrainent une imprécision liée notamment à la variabilité du gain de l'amplificateur en fonction de la température. La puissance réellement émise par l'antenne A1 présente donc un écart plus ou moins important avec la consigne de puissance imposée par l'équipement de contrôle EC.

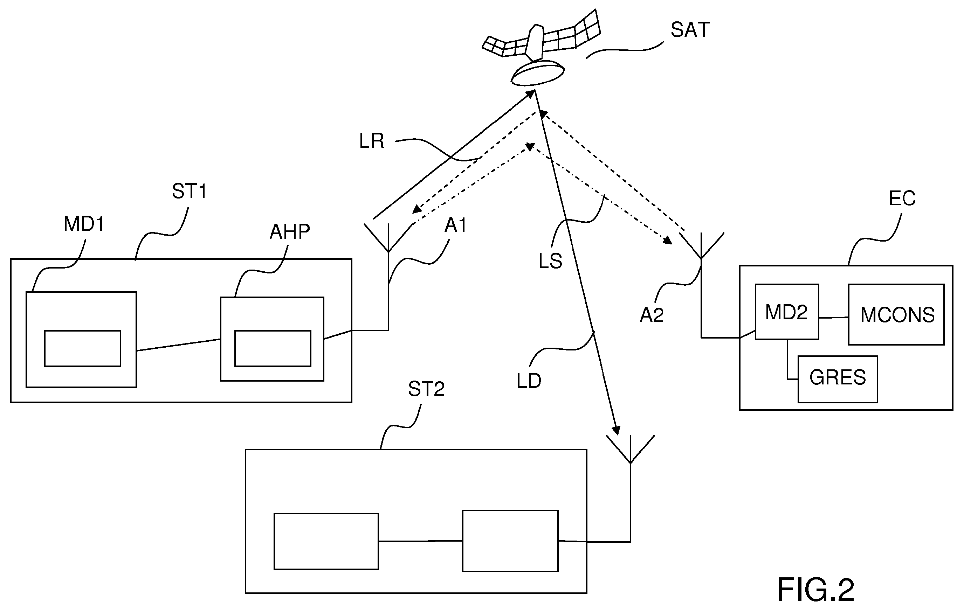

La figure 2 schématise un système de communications par satellite adapté selon l'invention pour résoudre les inconvénients du système décrit à la figure 1.

La station terrestre ST1 comporte, en plus des éléments déjà décrits à la figure 1, un module de mesure MP de la puissance isotrope rayonnée équivalente, ou PIRE, du signal émis par l'antenne A1. Avantageusement, ce module peut être co-localisé avec l'amplificateur haute puissance AHP de sorte à mesurer la puissance du signal en sortie de l'amplificateur. Dans ce cas, le gain de l'antenne A1 doit être ajouté pour obtenir une mesure de la puissance du signal émis par l'antenne A1. D'autres équipements peuvent être insérés entre l'amplificateur AHP et l'antenne A1, par exemple une chaine radio fréquence RF comportant d'autres amplificateurs et/ou filtres divers. Dans ce cas, le gain de la chaine RF doit également être ajouté à la mesure de puissance en sortie de l'amplificateur AHP pour obtenir une mesure de la PIRE émise en sortie de l'antenne A1.

Le module de mesure MP effectue une mesure de puissance périodiquement avec une période prédéfinie.

Si la mesure représente une puissance crête du signal alors celle-ci doit être corrigée du facteur crête de la modulation utilisée. Par exemple si le signal est modulé en utilisant une modulation π/4-QPSK, une correction de 3,5dB doit être apportée à la mesure.

En outre, dans tous les cas, la mesure doit également être corrigée du biais lié à la différence de mesure de puissance entre une porteuse non modulée et une porteuse modulée.

La station terrestre ST1, selon l'invention, comporte également un module de calcul MC, avantageusement co-localisé avec le modem MD1 mais qui peut également être implémenté sous forme d'un module d'interface entre le modem MD et le module de mesure MP. Il peut également être intégré à un équipement localisé entre le modem MD1 et l'amplificateur AHP tel que par exemple une unité de contrôle du pointage de l'antenne A1.

Le module de calcul MC, reçoit périodiquement, via le modem MD1, la consigne de puissance transmise par l'équipement de contrôle EC via la liaison de retour LR. La fréquence d'envoi de cette consigne est par exemple synchrone du rythme trame de la forme d'onde utilisée pour mettre en forme le signal.

Selon une variante particulière de l'invention, le modem MD1 déclenche une demande de mesure de puissance vers le module de mesure MP avant la fin d'une trame, en prenant en compte le délai de transmission entre les deux entités.

Le module de calcul MC détermine périodiquement une première moyenne des puissances mesurées par le module de mesure MP sur un horizon temporel donné et une seconde moyenne des consignes de puissance reçues sur le même horizon temporel. L'horizon temporel choisi peut être pris égal à un nombre donné de trames.

Avantageusement, les mesures de puissance aberrantes, en particulier les mesures correspondant à un mauvais pointage de l'antenne, peuvent être éliminées du calcul de moyenne.

Les moyennes calculées peuvent être des moyennes glissantes. Un avantage à l'utilisation d'une moyenne glissante est que le module de calcul MC peut être configuré pour intégrer directement un nombre de mesures de puissance prédéterminé correspondant à l'horizon temporel choisi et intégrer de la même façon les consignes de puissance. A chaque fois qu'une nouvelle mesure est disponible, elle est transmise par le module de mesure MP vers le module de calcul MC qui met à jour sa moyenne glissante en supprimant de cette moyenne la mesure la plus ancienne et en ajoutant la nouvelle valeur. Ainsi, l'utilisation d'une moyenne glissante permet de simplifier la complexité de mise en oeuvre de l'invention.

Le module de calcul MC détermine in fine l'écart entre la moyenne des consignes de puissance et la moyenne des puissances mesurées et communique cet écart au modem MD1 qui transmet cette information à l'équipement de contrôle EC via une liaison de signalisation LS.

L'équipement de contrôle EC, sur réception de l'information d'écart entre la consigne de puissance et la puissance de l'antenne réellement mesurée, modifie sa politique de gestion des ressources allouées au réseau par l'intermédiaire d'un module de gestion GRES.

En particulier, le module de gestion GRES met à jour la puissance isotrope rayonnée équivalente maximum admissible en lui ajoutant l'écart de puissances transmis par la station terrestre ST. Ainsi, l'incertitude entre la consigne de puissance et la puissance du signal réellement émis par l'antenne A1 est reportée sur la valeur seuil de la puissance admissible pour limiter le niveau d'interférences.

Deux cas de figure peuvent alors se présenter.

Si l'écart entre la consigne de puissance et la puissance mesurée est négatif, cela signifie que la puissance du signal réellement émis est supérieure à la consigne allouée par l'équipement de contrôle EC. Dans ce cas, il existe un risque que le niveau de puissance du signal dépasse le niveau admissible et l'équipement de contrôle EC doit alors baisser la consigne de puissance destinée à la station ST en diminuant, par exemple, le débit requis pour la liaison satellite associée à cette station.

Si, au contraire, l'écart entre la consigne de puissance et la puissance mesurée est positif, cela signifie que la puissance du signal réellement émis est inférieure à la consigne allouée par l'équipement de contrôle EC. Dans ce cas, les ressources du système ne sont pas exploitées au maximum. Le module de gestion de ressources GRES peut être configuré pour réallouer les ressources disponibles à la station ST, par exemple, en lui attribuant un débit supérieur ou bien encore allouer ces ressources à d'autres stations du réseau.

Les ressources allouées peuvent également être exprimées en termes d'efficacité spectrale en lieu et place du débit. L'efficacité spectrale dépend notamment du type de modulation et du type et rendement de code correcteur choisis.

Le module de calcul MC que comporte la station terrestre ST1 peut être réalisé sous forme logicielle et/ou matérielle.

Avantageusement, ce module de calcul peut être implémenté sous forme logicielle au niveau de la couche d'accès au médium MAC du modem MD1.

Le module de mesure MP que comporte la station terrestre ST1 peut également être réalisé sous forme logicielle et/ou matérielle.

Avantageusement, ce module de mesure peut être intégré à l'amplificateur haute puissance AHP.

Les différents modules mis en oeuvre par l'invention peuvent notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

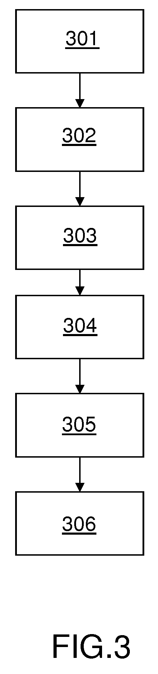

La figure 3 résume, sur un organigramme, les principales étapes de mise en oeuvre du procédé de contrôle des ressources selon l'invention.

Dans une première étape 301, l'équipement de contrôle EC calcule périodiquement une consigne de puissance isotrope rayonnée équivalente en fonction d'un bilan de liaison cible à atteindre sur la liaison satellite LD entre la station terrestre ST1 et une autre station ST2 du réseau. Cette consigne de puissance est envoyée à la station terrestre ST1 via une liaison satellite de retour LR.

Dans une deuxième étape 302, la station terrestre ST1 effectue une pluralité de mesures de la puissance isotrope rayonnée équivalente par l'antenne A1.

Dans une troisième étape 303, on calcule la moyenne, sur un premier intervalle temporel, des puissances mesurées.

Dans une quatrième étape 304, on calcule la moyenne, sur le même intervalle temporel, des consignes de puissances.

Dans une cinquième étape 305, on calcule l'écart entre la moyenne des consignes de puissance et la moyenne des mesures de puissance et on transmet cet écart à l'équipement de contrôle EC.

Dans une étape finale 306, l'équipement de contrôle EC décide d'allouer plus ou moins de ressources de communication à la station terrestre ST ou à d'autres stations du système en fonction dudit écart.

Les étapes 303,304 de calcul de moyennes et l'étape 305 de calcul d'écart de puissances sont réalisées périodiquement pour pouvoir fournir cette information régulièrement à l'équipement de contrôle.

L'invention présente notamment les avantages suivants. Elle permet de contourner la nécessité d'effectuer une calibration précise des équipements de la station terrestre, ce qui s'avère difficile pour des stations mobiles et en particulier pour la calibration des composants actifs de la chaine RF comme l'amplificateur haute puissance AHP. De plus, la solution proposée reste opérante même lorsqu'un composant de la chaine est modifié.

L'invention permet une optimisation des ressources satellites en termes de puissance effectivement rayonnée par les stations et indirectement de débit alloué pour communiquer. En outre, elle permet un meilleur respect des contraintes de puissance rayonnée maximum admissible telles que fixées par les normes en vigueur.

L'invention permet également une optimisation du partage des ressources sur l'ensemble des stations du réseau de communication.

## Revendications

1. Dispositif de communication par satellite (ST1) comprenant une antenne (A1) pour communiquer avec un satellite (SAT), ledit dispositif (ST1) étant **caractérisé en ce qu'**il comporte
• un module de mesure (MP) configuré pour effectuer une pluralité de mesures de la puissance isotrope rayonnée équivalente de l'antenne (A1),
• un module de réception (MD1) adapté pour recevoir, périodiquement, une consigne de puissance isotrope rayonnée équivalente à appliquer au signal émis par ladite antenne (A1), ladite consigne étant calculée par un équipement de contrôle (EC) pour respecter un bilan de liaison cible sur la liaison satellite entre ledit dispositif de communication (ST1) et un autre dispositif (ST2) du même réseau,
• un module de calcul (MC) configuré pour
o calculer une moyenne, sur un premier intervalle temporel, de ladite pluralité de mesures de la puissance,
o calculer une moyenne, sur un second intervalle temporel sensiblement identique audit premier intervalle temporel, desdites consignes de puissance reçues,
o calculer l'écart entre la moyenne des consignes de puissance et la moyenne des mesures de puissance,
• un module de transmission (MD1) adapté pour transmettre ledit écart vers ledit équipement de contrôle, via ledit satellite.

2. Dispositif de communication par satellite (ST1) selon la revendication 1 comprenant un amplificateur haute puissance (AHP) dans lequel ledit module de mesure (MP) est implémenté, la puissance étant mesurée en sortie dudit amplificateur haute puissance (AHP) et étant corrigée du gain de l'antenne (A1).

3. Dispositif de communication par satellite (ST1) selon la revendication 2 comprenant une chaine RF connectée en entrée à la sortie de l'amplificateur haute puissance (AHP) et en sortie à l'antenne (A1), la puissance mesurée en sortie dudit amplificateur haute puissance (AHP) étant en outre corrigée du gain de la chaine RF.

4. Dispositif de communication par satellite (ST1) selon l'une des revendications précédentes dans lequel la puissance mesurée en sortie de l'amplificateur haute puissance (AHP) est une puissance crête et cette puissance est corrigée du facteur crête de la modulation du signal émis.

5. Dispositif de communication par satellite (ST1) selon l'une des revendications précédentes dans lequel la puissance mesurée est corrigée d'un biais de mesure dépendant de la différence de puissance entre une porteuse modulée et une porteuse non modulée.

6. Dispositif de communication par satellite (ST1) selon l'une des revendications précédentes dans lequel lesdites moyennes sont des moyennes glissantes sur un horizon temporel choisi.

7. Système de communication par satellite comprenant au moins un dispositif de communication par satellite (ST1) selon l'une des revendications précédentes et un équipement de contrôle (EC) des ressources allouées au sein dudit système, ledit équipement de contrôle (EC) comprenant :
• Un module de calcul (MCONS) adapté pour calculer une consigne de puissance isotrope rayonnée équivalente en fonction d'un bilan de liaison cible à atteindre sur la liaison satellite entre un premier dispositif de communication (ST1) et un second dispositif de communication (ST2),
• Un module de transmission (MD2) de cette consigne de puissance audit premier dispositif (ST1),
• Un module de réception (MD2) d'un écart entre ladite consigne de puissance et la puissance isotrope rayonnée équivalente émise par ledit premier dispositif (ST1), ledit écart étant transmis par ledit premier dispositif (ST1),
• Un module de gestion de ressources (GRES) configuré pour allouer plus ou moins de ressources de communication audit premier dispositif (ST1) ou à d'autres dispositifs (ST2) du système en fonction dudit écart.

8. Système de communication par satellite selon la revendication 7 dans lequel ledit module de gestion de ressources (GRES) est configuré pour mettre à jour la puissance isotrope rayonnée équivalente maximum admissible en lui ajoutant ledit écart de puissances reçu.

9. Système de communication par satellite selon la revendication 8 dans lequel ledit module de gestion de ressources (GRES) est configuré pour prendre les décisions d'allocations de ressources suivantes :
• Si la consigne de puissance transmise audit premier dispositif (ST1) est strictement inférieure à la puissance isotrope rayonnée équivalente maximum admissible, allouer les ressources disponibles audit premier dispositif (ST1) ou à d'autres dispositifs (ST2) du système,
• Si la consigne de puissance transmise audit premier dispositif (ST1) est strictement supérieure à la puissance isotrope rayonnée équivalente maximum admissible, diminuer les ressources allouées audit premier dispositif (ST1).

10. Système de communication par satellite selon l'une des revendications 7 à 9 dans lequel ledit équipement de contrôle (EC) comporte une boucle d'asservissement de la puissance dudit premier dispositif (ST1) configurée pour ajuster la consigne de puissance transmise audit premier dispositif (ST1) en fonction des ressources allouées audit premier dispositif (ST1) et d'une cible de rapport signal à bruit mesurée sur la liaison entre ledit premier dispositif (ST1) et ledit second dispositif (ST2)

11. Système de communication par satellite selon l'une des revendications 7 à 10 dans lequel les ressources de communications allouées sont des ressources en débit ou en efficacité spectrale.

12. Procédé de contrôle des ressources allouées au sein d'un système de communication par satellite comprenant au moins un dispositif de communication par satellite (ST1) et un équipement de contrôle (EC) des ressources au sein dudit système, ledit procédé comprenant les étapes suivantes :
• Calculer (301) périodiquement une consigne de puissance isotrope rayonnée équivalente en fonction d'un bilan de liaison cible à atteindre sur la liaison satellite entre un premier dispositif de communication (ST1) et un second dispositif de communication (ST2),
• Effectuer (302) une pluralité de mesures de la puissance isotrope rayonnée équivalente de l'antenne dudit premier dispositif (ST1),
• Calculer (303) une moyenne, sur un premier intervalle temporel, de ladite pluralité de mesures de puissance,
• Calculer (304) une moyenne, sur un second intervalle temporel sensiblement identique audit premier intervalle temporel, desdites consignes de puissance,
• Calculer (305) l'écart entre la moyenne des consignes de puissance et la moyenne des mesures de puissance,
• Allouer (306) plus ou moins de ressources de communication audit premier dispositif (ST1) ou à d'autres dispositifs (ST2) du système en fonction dudit écart.

13. Procédé de contrôle des ressources selon la revendication 12 comprenant en outre une étape de mise à jour de la puissance isotrope rayonnée équivalente maximum admissible en lui ajoutant ledit écart de puissances.

14. Procédé de contrôle des ressources selon la revendication 13 comprenant en outre l'étape de décisions d'allocations de ressources suivante :
• Si la consigne de puissance transmise audit premier dispositif (ST1) est strictement inférieure à la puissance isotrope rayonnée équivalente maximum admissible, allouer les ressources disponibles audit premier dispositif (ST1) ou à d'autres dispositifs (ST2) du système,
• Si la consigne de puissance transmise audit premier dispositif (ST1) est strictement supérieure à la puissance isotrope rayonnée équivalente maximum admissible, diminuer les ressources allouées audit premier dispositif (ST1).

## Patentansprüche

1. Satellitenkommunikationsgerät (ST1), das eine Antenne (A1) zum Kommunizieren mit einem Satelliten (SAT) umfasst, wobei das Gerät (ST1) **dadurch gekennzeichnet ist, dass** es Folgendes umfasst:
• ein Messmodul (MP), konfiguriert zum Durchführen von mehreren Messungen der äquivalenten isotropisch abgestrahlten Leistung der Antenne (A1);
• ein Empfangsmodul (MD1) zum periodischen Empfangen eines äquivalenten isotropisch abgestrahlten Leistungssollwerts, der auf das von der Antenne (A1) gesendete Signal anzuwenden ist, wobei der Sollwert durch eine Steuereinrichtung (EC) berechnet wird, so dass er einer Ziel-Leistungsübertragungsbilanz auf der Satellitenverbindung zwischen dem Kommunikationsgerät (ST1) und einem anderen Gerät (ST2) desselben Netzwerks entspricht;
• ein Rechenmodul (MC), konfiguriert zum:
∘ Berechnen eines Mittels, über ein erstes Zeitintervall, der Mehrzahl von Leistungsmessungen;
∘ Berechnen eines Mittels, über ein zweites Zeitintervall, das mit dem ersten Zeitintervall im Wesentlichen identisch ist, der empfangenen Leistungssollwerte;
∘ Berechnen der Abweichung zwischen dem Mittel der Leistungssollwerte und dem Mittel der Leistungsmesswerte;
• ein Sendemodul (MD1) zum Senden der Abweichung zu dem Steuergerät über den Satelliten.

2. Satellitenkommunikationsgerät (ST1) nach Anspruch 1, das einen Hochleistungsverstärker (AHP) umfasst, in dem das Messmodul (MP) implementiert ist, wobei die Leistung am Ausgang des Hochleistungsverstärkers (AHP) gemessen und durch die Verstärkung der Antenne (A1) korrigiert wird.

3. Satellitenkommunikationsgerät (ST1) nach Anspruch 2, das eine RF-Kette umfasst, die am Eingang mit dem Ausgang des Hochleistungsverstärkers (AHP) und am Ausgang mit der Antenne (A1) verbunden ist, wobei die am Ausgang des Hochleistungsverstärkers (AHP) gemessene Leistung weiter durch die Verstärkung der RF-Kette korrigiert wird.

4. Satellitenkommunikationsgerät (ST1) nach einem der vorherigen Ansprüche, wobei die am Ausgang des Hochleistungsverstärkers (AHP) gemessene Leistung eine Spitzenleistung ist und diese Leistung durch den Spitzenfaktor der Modulation des gesendeten Signals korrigiert wird.

5. Satellitenkommunikationsgerät (ST1) nach einem der vorherigen Ansprüche, wobei die gemessene Leistung durch eine Messungenauigkeit korrigiert wird, die von der Differenz der Leistung zwischen einem modulierten Träger und einem nicht modulierten Träger abhängig ist.

6. Satellitenkommunikationsgerät (ST1) nach einem der vorherigen Ansprüche, wobei die Mittel gleitende Mittel über einen gewählten Zeithorizont sind.

7. Satellitenkommunikationssystem, das wenigstens ein Satellitenkommunikationsgerät (ST1) nach einem der vorherigen Ansprüche und eine Einrichtung (EC) zum Steuern der in dem System zugeordneten Ressourcen umfasst, wobei die Steuereinrichtung (EC) Folgendes umfasst:
• ein Rechenmodul (MCONS), eingerichtet zum Berechnen eines äquivalenten isotropisch abgestrahlten Leistungssollwerts in Abhängigkeit von einer Ziel-Leistungsübertragungsbilanz, die auf der Satellitenverbindung zwischen einem ersten Kommunikationsgerät (ST1) und einem zweiten Kommunikationsgerät (ST2) zu erreichen ist;
• ein Modul (MD2) zum Senden dieses Leistungssollwerts zu dem ersten Gerät (ST1);
• ein Modul (MD2) zum Empfangen einer Abweichung zwischen dem Leistungssollwert und der von dem ersten Gerät (ST1) gesendeten äquivalenten isotropisch abgestrahlten Leistung, wobei die Abweichung von dem ersten Gerät (ST1) gesendet wird;
• ein Ressourcenmanagementmodul (GRES), konfiguriert zum Zuordnen von mehr oder weniger Kommunikationsressourcen zu dem ersten Gerät (ST1) oder zu anderen Geräten (ST2) des Systems in Abhängigkeit von der Abweichung.

8. Satellitenkommunikationssystem nach Anspruch 7, wobei das Ressourcenmanagementmodul (GRES) zum Aktualisieren der maximal zulässigen äquivalenten isotropisch abgestrahlten Leistung durch Hinzufügen der empfangenen Leistungsabweichung dazu konfiguriert ist.

9. Satellitenkommunikationssystem nach Anspruch 8, wobei das Ressourcenmanagementmodul (GRES) für die folgende Entscheidungsfällung über Ressourcenzuordnung konfiguriert ist:
• Zuordnen der verfügbaren Ressourcen zu dem ersten Gerät (ST1) oder zu anderen Geräten (ST2) des Systems, wenn der zu dem ersten Gerät (ST1) gesendete Leistungssollwert streng unterhalb der maximal zulässigen äquivalenten isotrop gestrahlten Leistung liegt;
• Reduzieren der dem ersten Gerät (ST1) zugeordneten Ressourcen, wenn der zu dem ersten Gerät (ST1) gesendete Leistungssollwert streng über der maximal zulässigen äquivalenten isotrop abgestrahlten Leistung liegt.

10. Satellitenkommunikationssystem nach einem der Ansprüche 7 bis 9, wobei das Steuergerät (EC) eine Schleife zum Regeln der Leistung des ersten Geräts (ST1) umfasst, die zum Justieren des zu dem ersten Gerät (ST1) gesendeten Leistungssollwerts in Abhängigkeit von den dem ersten Gerät (ST1) zugeordneten Ressourcen und eines Ziel-Leistungs-Rausch-Verhältnisses konfiguriert ist, gemessen auf der Verbindung zwischen dem ersten Gerät (ST1) und dem zweiten Gerät (ST2).

11. Satellitenkommunikationssystem nach einem der Ansprüche 7 bis 10, wobei die zugeordneten Kommunikationsressourcen Bitraten- oder Spektraleffizienzressourcen sind.

12. Verfahren zum Steuern von Ressourcen, die innerhalb eines Satellitenkommunikationssystems zugeordnet sind, das wenigstens ein Satellitenkommunikationsgerät (ST1) und eine Einrichtung (EC) zum Steuern der Ressourcen in dem System umfasst, wobei das Verfahren die folgenden Schritte beinhaltet:
• periodisches Berechnen (301) eines äquivalenten, isotropisch abgestrahlten Leistungssollwerts in Abhängigkeit von einer Ziel-Leistungsübertragungsbilanz, die auf der Satellitenverbindung zwischen einem ersten Kommunikationsgerät (ST1) und einem zweiten Kommunikationsgerät (ST2) zu erzielen ist;
• Durchführen (302) von mehreren Messungen der äquivalenten, isotropisch abgestrahlten Leistung der Antenne des ersten Geräts (ST1);
• Berechnen (303) eines Mittels, über ein erstes Zeitintervall, der Mehrzahl von Leistungsmesswerten;
• Berechnen (304) eines Mittels, über ein zweites Zeitintervall, das mit dem ersten Zeitintervall im Wesentlichen identisch ist, der Leistungssollwerte;
• Berechnen (305) der Abweichung zwischen dem Mittel der Leistungssollwerte und dem Mittel der Leistungsmesswerte;
• Zuordnen (306) von mehr oder weniger Kommunikationsressourcen zu dem ersten Gerät (ST1) oder zu anderen Geräten (ST2) des Systems in Abhängigkeit von der Abweichung.

13. Verfahren zum Steuern von Ressourcen nach Anspruch 12, das ferner einen Schritt des Aktualisierens der maximalen zulässigen äquivalenten isotropisch abgestrahlten Leistung durch Hinzufügen der Leistungsabweichung dazu.

14. Verfahren zum Steuern von Ressourcen nach Anspruch 13, das ferner den folgenden Schritt der Ressourcenzuordnungs-Entscheidungsfällung beinhaltet:
• Zuordnen der verfügbaren Ressourcen zu dem ersten Gerät (ST1) oder zu anderen Geräten (ST2) des Systems, wenn der zu dem ersten Gerät (ST1) gesendete Leistungssollwert streng unter der maximal zulässigen äquivalenten isotropisch abgestrahlten Leistung liegt;
• Reduzieren der dem ersten Gerät (ST1) zugeordneten Ressourcen, wenn der zu dem ersten Gerät (ST1) gesendete Leistungssollwert streng über der maximal zulässigen, äquivalenten isotropisch abgestrahlten Leistung liegt.

## Claims

1. A satellite communication device (ST1) comprising an antenna (A1) for communicating with a satellite (SAT), said device (ST1) being **characterised in that** it comprises:
• a measurement module (MP) configured to carry out a plurality of measurements of the equivalent isotropically radiated power of the antenna (A1);
• a reception module (MD1) adapted to periodically receive an equivalent isotropically radiated power setpoint to be applied to the signal transmitted by said antenna (A1), said setpoint being computed by control equipment (EC) so as to comply with a target link budget on the satellite link between said communication device (ST1) and another device (ST2) of the same network;
• a computation module (MC) configured to:
∘ compute a mean, on a first time interval, of said plurality of power measurements;
∘ compute a mean, on a second time interval substantially identical to said first time interval, of said received power setpoints;
∘ compute the deviation between the mean of the power setpoints and the mean of the power measurements;
• a transmission module (MD1) adapted to transmit said deviation to said control equipment via said satellite.

2. The satellite communication device (ST1) according to claim 1, comprising a high-power amplifier (AHP), in which said measurement module (MP) is implemented, the power being measured at the output of said high-power amplifier (AHP) and being corrected for the gain of the antenna (A1).

3. The satellite communication device (ST1) according to claim 2, comprising an RF chain connected at the input to the output of said high-power amplifier (AHP) and at the output to said antenna (A1), the power measured at the output of said high-power amplifier (AHP) being further corrected for the gain of said RF chain.

4. The satellite communication device (ST1) according to one of the preceding claims, wherein the power measured at the output of the high-power amplifier (AHP) is a peak power and said power is corrected for the peak factor of the modulation of the transmitted signal.

5. The satellite communication device (ST1) according to one of the preceding claims, wherein the measured power is corrected for a measurement bias that depends on the difference in power between a modulated carrier and a non-modulated carrier.

6. The satellite communication device (ST1) according to one of the preceding claims, wherein said means are running means on a selected time horizon.

7. A satellite communication system comprising at least one satellite communication device (ST1) according to one of the preceding claims and equipment (EC) for controlling the resources allocated within said system, said control equipment (EC) comprising:
• a computation module (MCONS) adapted to compute an equivalent isotropically radiated power setpoint as a function of a target link budget to be achieved on the satellite link between a first communication device (ST1) and a second communication device (ST2);
• a module (MD2) for transmitting said power setpoint to said first device (ST1);
• a module (MD2) for receiving a deviation between said power setpoint and the equivalent isotropically radiated power transmitted by said first device (ST1), said deviation being transmitted by said first device (ST1);
• a resource management module (GRES) configured to allocate more or less communication resources to said first device (ST1) or to other devices (ST2) of the system as a function of said deviation.

8. The satellite communication system according to claim 7, wherein said resource management module (GRES) is configured to update the maximum permissible equivalent isotropically radiated power by adding said received power deviation thereto.

9. The satellite communication system according to claim 8, wherein said resource management module (GRES) is configured for the following resource allocation decision-making:
• allocating the available resources to said first device (ST1) or to other devices (ST2) of the system if the power setpoint transmitted to said first device (ST1) is strictly below the maximum permissible equivalent isotropically radiated power;
• reducing the resources allocated to said first device (ST1) if the power setpoint transmitted to said first device (ST1) is strictly above the maximum permissible equivalent isotropically radiated power.

10. The satellite communication system according to one of claims 7 to 9, wherein said control equipment (EC) comprises a loop for controlling the power of said first device (ST1) that is configured to adjust the power setpoint transmitted to said first device (ST1) as a function of the resources allocated to said first device (ST1) and of a target signal-to-noise ratio measured on the link between said first device (ST1) and said second device (ST2).

11. The satellite communication system according to one of claims 7 to 10, wherein the allocated communication resources are bit rate or spectral efficiency resources.

12. A method for controlling resources allocated within a satellite communication system comprising at least one satellite communication device (ST1) and equipment (EC) for controlling resources within said system, said method comprising the following steps:
• periodically computing (301) an equivalent isotropically radiated power setpoint as a function of a target link budget to be achieved on the satellite link between a first communication device (ST1) and a second communication device (ST2);
• performing (302) a plurality of measurements of the equivalent isotropically radiated power of the antenna of said first device (ST1);
• computing (303) a mean, on a first time interval, of said plurality of power measurements;
• computing (304) a mean, on a second time interval substantially identical to said first time interval, of said power setpoints;
• computing (305) the deviation between the mean of the power setpoints and the mean of the power measurements;
• allocating (306) more or less communication resources to said first device (ST1) or to other devices (ST2) of the system as a function of said deviation.

13. The method for controlling resources according to claim 12, further comprising a step of updating the maximum permissible equivalent isotropically radiated power by adding said power deviation thereto.

14. The method for controlling resources according to claim 13, further comprising the following step of resource allocation decision-making:
• allocating the available resources to said first device (ST1) or to other devices (ST2) of the system if the power setpoint transmitted to said first device (ST1) is strictly below the maximum permissible equivalent isotropically radiated power;
• reducing the resources allocated to said first device (ST1) if the power setpoint transmitted to said first device (ST1) is strictly above the maximum permissible equivalent isotropically radiated power.
